# EUROPÄISCHE PATENTSCHRIFT

(11) **EP 0 505 838 B1**
(45) Veröffentlichungstag und Bekanntmachung des Hinweises auf die Patenterteilung: **14.08.1996**
(21) Anmeldenummer: 92104242.0
(22) Anmeldetag: 12.03.1992
(51) Int. Cl.: H04N 5/50

(54) **Fernsehempfangsgerät**
Television receiving apparatus
Appareil récepteur de télévision

(30) Priorität: 28.03.1991 DE 4110293
(43) Veröffentlichungstag der Anmeldung: 30.09.1992
(73) Patentinhaber: LOEWE OPTA GMBH, D-96305 Kronach (DE)
(72) Erfinder: Müller, Heinrich, Ing.grad., W-8640 Wilhelmsthal (DE)

(56) Entgegenhaltungen:
- WO-A-86/05347
- DE-A- 2 513 344
- FR-A- 2 305 903
- GB-A- 2 078 035
- US-A- 3 737 565

## Beschreibung

Die Erfindung betrifft ein Fernsehempfangsgerät mit den im Oberbegriff des Anspruchs 1 angegebenen Merkmalen.

Nach der Verfügung 478 der Deutschen Bundespost besteht für Fernsehempfänger die Forderung, daß mit einem Fernsehempfangsgerät nur normgerechte Fernsehsignale und keine anderen Funksender empfangen und abgehört werden dürfen. Es sind verschiedene Schaltungsausführungen bekannt, die diese Forderungen erfüllen und in Fernsehempfangsgeräten seit vielen Jahren eingesetzt werden. Derartige Schaltungen sind unter dem Begriff "Stummschaltungen " allgemein geläufig. Sämtliche Stummschaltungen haben gemeinsam, daß eine Schaltungsanordnung zum Erkennen eines normgerechten Fernsehsignals vorhanden ist, beispielsweise in Form eines Amplitudensiebes, mit dem die Synchronimpulse aus dem Signalgemisch abgetrennt werden. Zur weiteren Überprüfung werden solche abgetrennten Synchronimpulse einer Koinzidenzschaltung zugeführt, in welcher die Horizontalsynchronimpulse mit Vertikalsynchronimpulsen verglichen werden. Bei deren Koinzidenz wird ein Koinzidenzsignal ausgegeben, das direkt oder indirekt über weitere Schaltungen eine Schalteinrichtung im Tonkanal , also eine spezielle Fernseheinrichtung, steuert, um bei Vorhandensein eines Fernsehsignals leitend (geschlossener Schalter) zu schalten und im Falle des Nichtvorhandenseins eines Fernsehsignals sperrend (geöffneter Schalter) zu schalten. Dadurch wird verhindert, daß nicht normgerechte Funksignale mitgehört werden können, z.B. Polizeifunk, Rettungsdienst usw.

Eine Schaltung zum Erkennen von Synchronimpulsen ist beispielsweise aus der AT-A-284 221 bekannt. Eine Schaltungsanordnung zum Erkennen, ob es sich bei dem Empfangssignal um ein normgerechtes Fernsehsignal handelt, ist weiterhin aus der DE-A-25 13 344 bekannt. Diese bekannte Schaltungsanordnung weist neben einem Amplitudensieb auch eine Koinzidenzschaltung auf, deren Ausgang eine Schalteinrichtung steuert, die einen Verstärker im Tonsignalkanal zuregelt, wenn kein Fernsehsignal vorliegt, und aufregelt, wenn ein solches Signal gegeben ist.

Eine Stummschaltung, die in Abhängigkeit von dem elektronischen Suchlauf wirkt, wobei während des Suchlaufs ein Stummschaltsignal an die Schalteinrichtung im Tonsignalkanal im Fernseher abgegeben wird, ist weiterhin aus der US-A-3,825,838 bekannt. Eine Schaltung mit Koinzidenzstufe zur Feststellung des Vorhandenseins von Synchronimpulsen, die dazu dient, während der Anlaufphase eines Fernsehers, also im noch nicht synchronen Zustand, so zu steuern, daß Störgeräusche über den Tonkanal nicht zu hören sind, ist aus der DE-A-0 940 994 bekannt.

Amplitudensiebe zum Abtrennen der Synchronimpulse und damit auch zur Steuerung einer Schalteinrichtung in dem Tonkanal zur Unterdrückung von hörbaren Störimpulsen und nicht hörerlaubten Sendungen sind weiterhin aus dem Fachbuch "Fernsehtechnik ohne Ballast", von Limann/Pelka, erschienen im Franzis Verlag, 1988, Seite 208 ff. , bekannt. Auf Seite 212 ist ein von der Firma Valvo, Hamburg, vertriebener integrierter Schaltkreis "Horizontalkombination TDA 2593", dargestellt, der ein Amplitudensieb integriert enthält, dessen Ausgangsimpulse einem Koinzidenzdetektor zugeführt werden und der weiterhin Impulse erzeugt, die zur Steuerung einer Schalteinrichtung verwendet werden können, die beispielsweise in dem Tonkanal vorgesehen sein kann.

Die Fernsehempfangsgeräte eingangs genannter Art gestatten neben der Signalverarbeitung des Bild- und Tonsignals einer ersten Fernsehsignalquelle, die z.B. das von einer Antenne empfangene und eingespeiste Signal oder das von einem Kabelanschluß eingespeiste HF-Signal in einer Kabelübertragungsanlage sein kann oder das über einen Satellitenempfänger empfangene in den Tuner eingespeiste Signal, daß dieses nach der Demodulation als Video- und Tonsignal (Stereo- oder auch 2-Ton-Kanäle) über einen sogenannten AV-Anschluß bzw. einen Scart-Anschluß nach außen geführt werden kann, um die anliegenden Signale neben der Signalverarbeitung in den Signalverarbeitungsschaltungen und der Verstärkung des Tonsignals zur Darbietung über den integrierten Lautsprecher z.B. aufzeichnen zu können. Um nun Signale von einer zweiten Fernsehsignalquelle, z.B. ein Videogerät, über die Anschlüsse auch einspeisen zu können, sind weitere Eingänge vorgesehen, über die von einer zweiten Signalquelle diese Signale eingespeist werden können. Dabei dient ein Umschalter (AV-Schalter) , der am Gerät vorhanden ist und betätigt werden muß, oder im Falle eines elektronischen Umschalters von einer Schaltung von einem die Fernsehsignalquelle repräsentierenden Gerät dieser dazu, die Signalverarbeitung für die demodulierten Signale von der ersten Fernsehsignalquelle abzuschalten und die Signale der zweiten Fernsehsignalquelle anzuschalten. Der Ton und das Bild kommen somit bei AV-Betrieb von der zweiten Fernsehsignalquelle und die Signale von der ersten Fernsehsignalquelle liegen nach wie vor an den Ausgängen des Steckverbinders an. Dieser Betriebszustand eröffnet bei den bekannten Fernsehern die Möglichkeit, dennoch in unerlaubter Weise solche Sender zu empfangen und deren Ton mitzuhören, die keine normgerechten Fernsehsignale sind. Dies ist beispielsweise dadurch möglich, daß der nicht erlaubte Sender per Zufall durch Kanalwahl oder Feinabstimmung getroffen wird, wenn eine solche Abstimmung im AV-Betrieb noch ermöglicht wird. Eine Empfangskontrolle, ob es sich bei dem von der ersten Fernsehsignalquelle empfangenen Sender dann um ein normgerechtes Fernsehsignal handelt, ist nicht möglich, da die Schaltung zur Erkennung eines normgerechten Fernsehsignals an die zweiten Eingänge für die Fernsehsignale von der zweiten Fernsehsignalquelle angeschaltet ist. Um für diesen Betriebszustand dennoch den gesetzlichen Forderungen gerecht zu werden, ist bereits vorgeschlagen worden, eine weitere Schaltungsanordnung zur Erkennung eines normgerechten Fernsehsignals unmittelbar hinter dem ZF-Verstärker oder in diesem vorzusehen, um darüber die Stummschaltung für den Tonkanal des ersten Tonsignals zu steuern.

Nur wenn eine solche zusätzliche Erkennungsschaltung vorgesehen ist, ist es möglich, auch durch Feinverstimmung, bei der von einem genormten Fernsehraster abweichend die Sender einstellbar sind, sicherzustellen, daß ein Mithören eines unerlaubten Tonsignals nicht möglich ist. Wird nun die zusätzliche Erkennungsschaltung in den Fernsehempfängern nicht vorgesehen, so ist es bei FM-moduliertem Ton, wie es beim Intercarrier-Verfahren der Fall ist, möglich, wenn ein zweiter Träger unterhalb des zufällig im Abstand des gewählten ersten Ton-ZF-Trägers (5,5 MHz, 6 MHz usw.) vorhanden ist, diesen mitzuhören. Wird in einem Mehrnormengerät ein AM-modulierter Ton empfangen, handelt es sich z.B. um den Empfang eines Tonsignals nach der L-Norm, so ist ein unerlaubter Empfang der Tonsignale sowohl über den Tonausgang im AV-Betrieb als auch über den Videoausgang möglich.

Ausgehend von einem Fernsehempfangsgerät eingangs genannter Art liegt der Erfindung die Aufgabe zugrunde, unter Vermeidung der aufgezeigten Nachteile der bekannten Schaltungen eine sicherere Stummschaltung in einem Fernsehgerät vorzusehen, ohne daß hierfür zusätzlich im ZF-Verstärker oder diesem unmittelbar nachgeschaltet eine weitere Schaltungsanordnung zum Erkennen des normgerechten Fernsehsignals vorgesehen sein muß. Die Schaltung soll weiterhin auch in Fernsehgeräten mit Bild-in-Bild-Prozessor einsetzbar sein, der eine eigene Schaltungsanordnung zum Erkennen eines normgerechten Fernsehsignals aufweist.

Zur Lösung der Aufgabe sieht die Erfindung die im Kennzeichen des Anspruchs 1 angegebene technische Lehre vor, die sicherstellt, daß auch während des Umschaltens und bei noch nicht abgeschlossener Abstimmung des Gerätes auf einen Sender von der ersten Fernsehsignalquelle verhindert wird, daß Tonsignale nicht erlaubter Sender mitgehört werden können, auch dann nicht, wenn diese über Ausgänge vom Fernsehempfangsgerät abgegriffen werden können. Der Begriff Fernsehempfangsgerät schließt selbstverständlich Farbfernsehgeräte mit ein. Ebenso können periphere Geräte, zweite Fernsehsignalquelle, Geräte sein, die Farbfernsehsignale abgeben bzw. aufzeichnen.

Vorteilhafte Weiterbildungen der Erfindung gemäß Anspruch 1 sind in den abhängigen Unteransprüchen 2 bis 11 im einzelnen angegeben.

Besondere Schaltungsmaßnahmen, die zu ergreifen sind, um die Anwendung in Geräten mit Bild-in-Bild-Darstellung zu ermöglichen, wobei das eine Bild von der ersten Fernsehsignalquelle und das zweite Bild von der zweiten Fernsehsignalquelle eingespeist werden, sind in den Ansprüchen 8 und 9 angegeben. Die Besonderheit besteht darin, daß bei Bild-in-Bild-Darstellungen für die Erkennung des Vorhandenseins von Bildsynchronsignalen das Amplitudensieb in dem Bild-in-Bild-Prozessor verwendet wird, um über diesen die Schalteinrichtung in dem Tonkanal und/oder dem Videokanal des ersten Fernsehsignals zu steuern. Bekanntlich werden bei der Bild-in-Bild-Darstellung beide Signalquellen dann einer Mischerschaltung zugeführt, die von dem Bild-in-Bild-Prozessor gesteuert wird und die Signale so miteinander verschachtelt, daß in gewünschter Weise das Sekundärbild in dem Primärbild auf dem Bildschirm dargestellt wird, wobei entweder das Bild von der ersten Fernsehsignalquelle oder das Bild von der zweiten Fernsignalquelle als Primärbild dient.

Bei anderen Bild-in-Bild-Schaltungen ist vorgesehen, daß bei der Bild-in-Bild-Darstellung eine Tonumschaltung zusätzlich möglich ist, die aber nicht erfindungsrelevant ist, um beispielsweise den die Bilder begleitenden Ton wahlweise von der ersten oder der zweiten Fernsehsignalquelle zuschalten zu können.

Die Schaltung zum Erkennen eines vollständigen Fernsehsignals besteht in einfacher Weise aus einem Amplitudensieb, das die Synchronimpulse aussiebt und in Abhängigkeit hiervon einen Steuerimpuls generiert. Einem solchen Amplitudensieb kann aber auch gemäß Anspruch 11 ein Koinzidenzdetektor nachgeschaltet sein, über den festgestellt wird, ob es sich tatsächlich bei den empfangenen Signalen unter Heranziehung der empfangenen Synchronimpulse um ein Fernsehsignal handelt.

Ein besonderer Fehlerzustand der Stummschaltung wird auch dadurch erreicht, wenn beispielsweise auf einen Sender der ersten Fernsehsignalquelle abgestimmt ist und sodann ein Antennenwechsel vorgenommen wird. Beispielsweise wird das Gerät zunächst an einem Kabelfernsehnetz betrieben und sodann an eine Antenne angeschlossen oder umgekehrt. So ist es möglich, daß mit dem eingestellten Programm u.U. ein in diesem Kanal übertragener Sender gehört wird, der kein Fernsehsender ist. Um auch diese Fehlermöglichkeit auszuschalten, ist nach Anspruch 4 oder 5 vorgesehen, daß entweder die AFC-Spannung der Empfängerschaltung für die erste Fernsehsignalquelle oder die Regelspannung für den Tuner der Empfängerschaltung für das erste Fernsehsignal detektiert wird und in Abhängigkeit von den in den Ansprüchen 4 und 5 angegebenen Größen ein Blockierimpuls generiert wird, um die Stummschaltung zu veranlassen, daß das Tonsignal von der ersten Fernsehsignalquelle nicht durchgeschaltet wird, wenn der beschriebene besondere Betriebsfall eintritt.

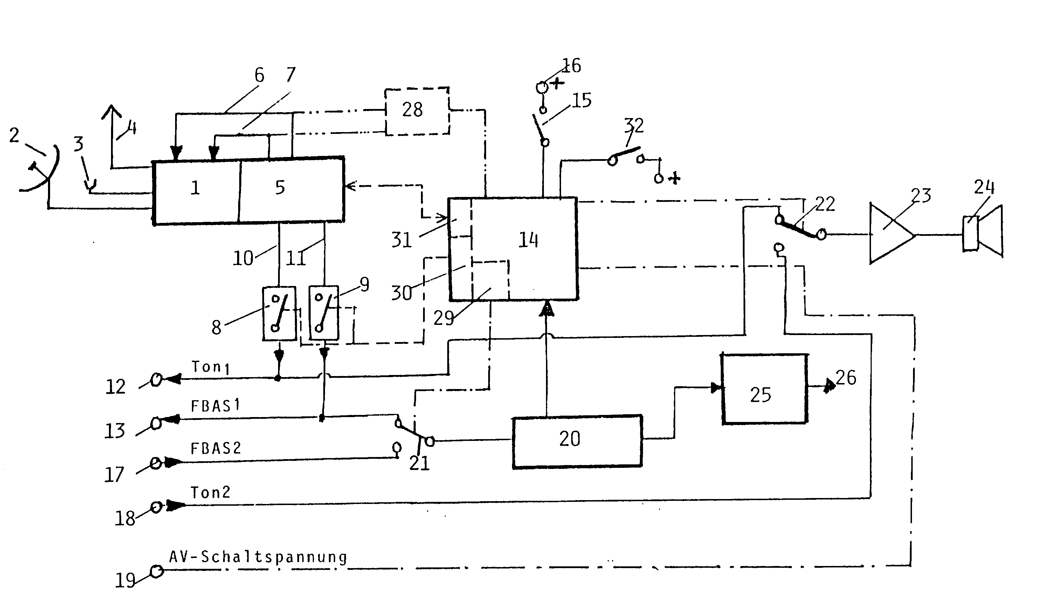

Die Erfindung wird nachfolgend anhand der in der Figur beispielhaft und schematisch dargestellten Schaltung in Form eines Blockschaltbildes näher erläutert.

Die Empfängerschaltung für Signale von einer ersten Fernsehsignalquelle besteht aus einem Tuner 1 und einem ZF-Verstärker 5. An den Tuner 1 sind beispielsweise anschließbar: eine Satellitenempfangsanlage 2, eine Kabelfernsehanlage 3 oder eine Antenne 4. Die Antenne 4 kann z.B. auch direkt in die Anschlußbuchse für den Kabelfernsehanschluß eingesetzt werden. Der Tuner 1 kann ein solcher mit einer PLL- oder FLL-Abstimmschaltung oder einer Spannungssyntheseschaltung sein. Er kann darüber hinaus eine automatische Frequenzkorrekturschaltung (AFC) aufweisen, die symbolisch durch die Brücke 6 zwischen dem ZF-Verstärker 5 und dem Tuner 1 eingezeichnet ist. Auf jeden Fall weist ein solcher Tuner einen Regelkreis auf, der in Abhängigkeit von dem Empfangspegel eine Regelung der Verstärker im Tuner 1 vornimmt. Auch dieser ist nur symbolisch durch die Brücke 7 zwischen ZF-Verstärkerblock 5 und Tuner 1 eingezeichnet. Die zu der Abstimmung notwendigen Daten werden über eine Leitung 32 eingespeist und einem Speicher einer zentralen Steuerschaltung 14, die beispielsweise einen Mikroprozessor aufweisen kann, zugeführt. In der zentralen Steuerschaltung 14 ist ferner eine Blockierschaltung 31 enthalten, über die verhindert wird, daß eine Abstimmung auf andere Sender durch Suchlauf oder Feinabstimmung erfolgt, wenn auf AV-Betrieb umgeschaltet ist. Ferner ist in der zentralen Steuerschaltung 14 eine Stummschaltung 30 enthalten, über die eine Schalteinrichtung 8 und ggf. auch eine weitere Schalteinrichtung 9, die im Tonsignalzweig 10 bzw. im Videosignalzweig 11 eingefügt sind, symbolisch aus dem ZF-Verstärker 5 herausgeführt eingezeichnet sind. Darüber hinaus weist die zentrale Steuerschaltung 14 auch eine Halteschaltung 29 auf, auf deren Bedeutung später eingegangen wird. Um nun eine zweite Fernsehsignalquelle anschließen zu können, z.B. ein Videogerät, sind zweite Video- und Toneingänge 17, 18 vorgesehen. So liegt das Videosignal von der zweiten Fernsehsignalquelle an dem Eingang 17 an, beispielsweise das FBAS-Signal von einem Videorecorder, und am Eingang 18 das Tonsignal von der zweiten Fernsehsignalquelle. Es kann sich dabei selbstverständlich auch um ein Stereotonsignal handeln. Es kann für eine Zweitonübertragung auch noch ein weiterer Anschluß vorgesehen sein, um den zweiten Tonkanal direkt einspeisen zu können. Weiterhin sind in der Anschlußreihe Ausgänge 12 für den Ton von der ersten Fernsehsignalquelle und 13 für das Videosignal an der ersten Fernsehsignalquelle eingezeichnet. Am Videoausgang 13 liegt ein FBAS-Signal an, das z.B. mit einem externen Gerät aufgezeichnet werden kann. Dies ist dann möglich, wenn die Schalteinrichtungen 8 und 9 in ihren Zuführungsleitungen leitend geschaltet sind, d.h., die Schalter geschlossen sind. Weiterhin ist ein AV-Anschluß 19 vorgesehen, über den eine Schaltspannung in das Fernsehgerät eingebbar ist. Diese Schaltspannung liegt von einem externen Gerät, z.B. Videorecorder, an, wenn dieses entsprechend ausgestaltet ist. Die AV-Schaltspannung kann aber auch durch Schließen des AV-Schalters 15 am Gerät an die zentrale Steuerschaltung 14 abgegeben werden. Im letzteren Fall wird die positive Spannung von dem Spannungsquellenanschluß 16 an die zentrale Steuerschaltung 14 durchgeschaltet. Die zentrale Steuerschaltung 14 bewirkt in Abhängigkeit von der Schließstellung des AV-Schalters bzw. dem Anliegen einer AV-Schaltspannung, daß zunächst der Umschalter 21, der als AV-Umschalter das Videosignal von der ersten Fernsehquelle abschaltet und das Videosignal von der zweiten Fernsehsignalquelle anschaltet, in der dargestellten Stellung verbleibt, bis die nachgeschaltete Schaltungsanordnung 20 zum Erkennen eines normgerechten Fernsehsignals von der ersten Fernsehsignalquelle durch dieses Signal als solches erkannt hat. Die Schaltungsanordnung 20 besteht beispielsweise aus einem Amplitudensieb und einem Phasenvergleicher sowie einer Koinzidenzschaltung. Sie gibt in Abhängigkeit von der Detektion der Synchronimpulse ein Steuersignal an die zentrale Steuerschaltung 14 ab, die sodann die Halteschaltung freigibt, so daß entsprechend der anliegenden Schaltspannung der Umschalter 21 für den AV-Betrieb umschaltet und die Videosignale von der zweiten Fernsehsignalquelle über den Eingang 17 an die Schaltungsanordnung 20 zum Erkennen, ob es sich dabei dann um ein Fernsehsignal handelt, anlegt. Über diese Schaltungsanordnung 20 werden, je nachdem welches Signal anliegt, die Videosignale an eine Videosignalverarbeitungsschaltung 25 abgegeben, von deren Ausgang 26 die RGB-Signale abgreifbar sind, um sie auf dem Bildschirm des Fernsehgerätes darstellen zu können. Synchron mit dem Umschalter 21 wird zugleich ein weiterer Schalter 22 angesteuert. Dies ist durch die strichpunktierten Linien verdeutlicht, so daß entweder der Ton 1 von der ersten Fernsehsignalquelle an die Endverstärker 23 und den Lautsprecher 24 durchgeschaltet wird oder aber der Ton 2, also das Tonsignal von der zweiten Fernsehsignalquelle. Als Besonderheit ist eine weitere Detektorschaltung 28 vorgesehen, die die AFC-Spannung detektiert. Wird beispielsweise zunächst eine Antenne 4 an den Eingang 3 angeschlossen und diese entfernt und ein Kabel einer Fernsehkabelanlage angeschlossen, so wird die AFC-Spannung während des Wechsels weglaufen, so daß der Detektor 28 anhand der AFC-Spannung erkennen kann, ob ein Antennenanschlußwechsel erfolgt ist, so daß möglicherweise eingespeiste Sender, die nicht gehört werden dürfen, über diese Detektorschaltung 28 und die Stummschaltung 30 eine zwangsweise "Stummschaltung" der Schalteinrichtungen 8 und 9 bewirken, um die Ton- und Videosignalleitungen 10 und 11 von den weiteren Schaltungen zu trennen, solange der AV-Betrieb aufrechterhalten bleibt. Erst wenn von dem AV-Betrieb wieder in den normalen Fernseh-Darstellungsbetrieb umgeschaltet wird, werden dann zwangsläufig die Schalteinrichtung 8 und/oder die Schalteinrichtungen 8 und 9 über die Stummschaltung 30 wieder leitend geschaltet, d.h. die Schalteinrichtungen 8 und 9 sind geschlossen, und es erfolgt auch sofort eine Umschaltung des Umschalters 21 in die andere Position, so daß dann die von der ersten Fernsehsignalquelle anliegenden Signale auf ihre normgerechte Zusammenstellung mit der Schaltungsanordnung 20 abgeprüft werden Können, so daß die zentrale Steuerschaltung 14 den Schalter 22 von der zweiten Fernsehsignalquelle erst dann auf die erste umschaltet, wenn ersichtlich ist, daß es sich bei dem empfangenen Sender um einen normgerechten Fernsehsender handelt. Über einen Schalter 32 ist es möglich, wahlweise den Ton 1 oder den Ton 2 an den Lautsprecher 24 zu schalten, obgleich nur das Videosignal 2 dargestellt wird.

## Patentansprüche

1. Fernsehempfangsgerät mit einer HF-Empfängerschaltung zum Empfang von Fernsehsignalen von einer ersten Fernsehsignalquelle und
mit Video- und Tonsignalein- und -ausgängen (FBAS oder BAS) zum Empfang von Video- und Tonsignalen von einer zweiten Fernsehsignalquelle und zum Ausgeben von Video-und Tonsignalen von der ersten Fernsehsignalquelle,
mit einer Schaltungsanordnung zum Erkennen eines normgerechten Fernsehsignals, die in Abhängigkeit von Synchronisationsimpulsen eine Steuergröße für eine zum Ein- und Ausschalten einer Fernseheinrichtung vorgesehene Schalteinrichtung liefert, um den Tonempfang eines normgerechten Fernsehsignals mithören und im Falle des Empfangs eines nicht normgerechten Fernsehsignals nicht mithören zu Können, und
mit einem elektronischen Umschalter, über den das Fernsehsignal der ersten Fernsehsignalquelle von den Signalverarbeitungsschaltungen
einschließlich der Schaltungsanordnung zum Erkennen eines normgerechten Fernsehsignals und des Tonkanals abgeschaltet wird, während das Fernsehsignal der zweiten Fernsehsignalquelle angeschaltet wird,
welcher Umschalter durch Betätigung eines Schalters oder durch eine an einen Schaltspannungseingang des Fernsehgerätes angelegte Spannung steuerbar ist, und mit einer Abstimmschaltungsanordnung, mit der die HF-Empfängerschaltung auf bestimmte Empfangssender oder durch Sendersuchlauf einstellbar ist und/oder mittels Feinraster innerhalb einer Kanalbandbreite verstimmbar oder mittels automatischer Frequenzkorrekturschaltungen (AFC) auf die Empfangsfrequenz abstimmbar ist, welche HF-Empfängerschaltung eine vom Empfangspegel abhängig gesteuerte Regelschaltung aufweist,
**dadurch gekennzeichnet,**
daß der elektronische Umschalter (21) beim Anschalten der zweiten Fernsehsignalquelle (Audio/Video-Betrieb bzw. AV-Betrieb) über eine Halteschaltung gesteuert in einer ersten Stellung kurzzeitig verbleibt, in der das momentan empfangene Fernsehsignal von der ersten Fernsehsignalquelle in der Schaltungsanordnung (20) zum Erkennen eines normgerechten Fernsehsignals detektiert wird, und daß bei Feststellen des Anliegens eines normgerechten Fernsehsignals von der ersten Fernsehsignalquelle eine Stummschaltung (30) die Schalteinrichtung (8) leitend (Schalter geschlossen) schaltet und im Falle, daß kein normgerechtes Signal anliegt, diese sperrend (Schalter geöffnet) schaltet, und daß erst nach der Detektion der Umschalter (21) in Abhängigkeit von der Schaltspannung das Videosignal der zweiten Fernsehsignalquelle an die Signalverarbeitungsschaltung einschließlich der Schaltung zum Erkennen eines normgerechten Fernsehsignals anschaltet, und
daß eine weitere Schalteinrichtung (22) vorgesehen ist, über die der Ton der ersten Fernsehsignalquelle von dem Tonkanal (23, 24) synchron mit dem Videosignal abschaltet und das Tonsignal von der zweiten Fernsehsignalquelle an den Tonkanal (23, 24) anschaltet, und
daß eine Blockierschaltung (31) vorgesehen ist, die die Abstimmschaltung für einen Suchlauf oder eine Senderfeinabstimmung - über manuell betätigbare Schalter steuerbar - (32) nach erfolgtem Anschalten der zweiten Fernsehsignalquelle verriegelt.

2. Fernsehempfangsgerät nach Anspruch 1, dadurch gekennzeichnet, daß eine dritte Schalteinrichtung (9) in dem Signalzweig des Videosignals von der ersten Fernsehsignalquelle und vor dem Umschalter (21) und/oder einem Videoausgang (13) geschaltet ist, die parallel mit der Schalteinrichtung (8) den Videosignalzweig leitend schaltet oder sperrt.

3. Fernsehempfangsgerät nach Anspruch 1, dadurch gekennzeichnet, daß die Schalteinrichtung (8) im Tonsignalzweig des Tonsignals von der ersten Fernsehsignalquelle vor einem Tonsignalausgang (12) vorgesehen ist.

4. Fernsehempfangsgerät nach einem der Ansprüche 1 bis 3 in Verbindung mit einer Empfängerschaltung mit einer automatischen Frequenzkorrekturschaltung (AFC) , dadurch gekennzeichnet, daß eine Detektorschaltung (28) vorgesehen ist, die das automatische Frequenznachsteuersignal detektiert und bei einem plötzlichen Sprung infolge eines Wechsels der Zuführung (Antennenwechsel ) am HF-Anschluß der Empfängerschaltung ein Sperrsignal generiert, das die Stummschaltung (30) derart steuert, daß die Schalteinrichtung (8) oder die Schalteinrichtungen (8 und 9) sperrend schalten.

5. Fernsehempfangsgerät nach Ansprüchen 1 bis 3, dadurch gekennzeichnet, daß eine Detektorschaltung vorgesehen ist, die die Regelspannung der Empfängerschaltung detektiert und bei plötzlichem Aussetzen der Regelspannung infolge eines Wechsels der HF-Zuführung (Antennenwechsel) am HF-Eingang ein Blockiersignal generiert, das die Stummschaltung (30) derart steuert, daß die Schalteinrichtung (8) oder die Schalteinrichtungen (8 und 9) sperrend schalten.

6. Fernsehempfangsgerät nach einem der vorhergehenden Ansprüche, dadurch gekennzeichnet, daß als zentrale Steuerschaltung ein Mikroprozessor (14) mit einem Ablaufsteuerprogramm vorgesehen ist, der die Blockierschaltung (31) und/oder die Stummschaltung (30) und/oder die Halteschaltung (29) realisiert, und daß der Mikroprozessor einen Steuereingang aufweist, an dem das AV-Umschaltsignal anliegt.

7. Fernsehempfangsgerät nach einem der vorhergehenden Ansprüche, dadurch gekennzeichnet, daß im AV-Betrieb vorabgespeicherte Kanäle über die in der zentralen Steuerschaltung (14) enthaltene Abstimmschaltung aufrufbar sind, und daß die Schalteinrichtung (8) und/oder die Schalteinrichtungen (8 und 9) den jeweiligen Signalzweig leitend schalten.

8. Fernsehempfängerschaltung nach Anspruch 7, dadurch gekennzeichnet, daß die durchgeschalteten Signale an einer Signalauswert- und Verarbeitungsschaltung über weitere Schalteinrichtungen und für die Bild-in-Bild-Darstellung an einer Mischerschaltung anliegen, in der das ausgewählte Signal von der zweiten Fernsehsignalquelle mit dem von der ersten für die Darstellung mischbar ist.

9. Fernsehempfangsgerät nach Anspruch 8, dadurch gekennzeichnet, daß von der weiteren Schaltungsanordnung zur Erkennung des Anliegens eines vollständigen Fernsehsignals für die Bild-in-Bild-Darstellung die Schalteinrichtung (22) im Tonkanal wahlweise an den Tonsignalweg der ersten Fernsehsignalquelle oder den Tonsignalweg der zweiten Tonsignalquelle anschaltbar ist, und daß für die Auswahl der Tonsignalquelle ein Schalter vorgesehen ist, der ein Schaltsignal an die Abstimmschaltung in der zentralen Steuerschaltung (14) abgibt.

10. Fernsehempfangsgerät nach einem der vorhergehenden Ansprüche, dadurch gekennzeichnet, daß die Schaltungsanordnung (20) zum Erkennen eines vollständigen Fernsehsignals ein Amplitudensieb enthält, mit dem die Synchronimpulse abgetrennt werden, und daß die Schaltungsanordnung (20) einen Steuerimpuls in Abhängigkeit von der Feststellung der Synchronimpulse generiert, der als Information an der zentralen Steuerschaltung (14) anliegt.

11. Fernsehempfangsgerät nach Anspruch 10, dadurch gekennzeichnet, daß die Schaltungsanordnung (20) zum Erkennen eines vollständigen Fernsehsignals einen Koinzidenzdetektor zur Überprüfung der abgetrennten Synchronimpulse aufweist, in welchem die Horizontalsynchronimpulse mit Vertikalsynchronimpulsen verglichen werden, und daß der Ausgang der Koinzidenzschaltung eine Steuerinformation in Abhängigkeit des Anliegens oder Nichtanliegens von Synchronimpulsen abgibt.

## Claims

1. Television receiving apparatus including a HF receiver circuit for receiving television signals from a first source of television signals and
including video and sound signal inputs and outputs (FBAS or BAS) for the reception of video and sound signals from a second source of television signals and for delivering the video and sound signals from the first source of television signals,
including a circuit arrangement for detecting a standard television signal, which circuit supplies, in dependence on the synchronising pulses, a variable control signal for a switching device that is provided for switching a television device on and off in order to be able to monitor the sound received in a standard television signal but not be able to hear the sound in the case of reception of a non-standard television signal and including an electronic change-over switch by means of which the television signal from the first source of television signals is disconnected from the signal processing circuits, inclusive of the circuit arrangement for detecting a standard television signal and the sound channel, whilst the television signal from the second source of television signals is connected thereto, which change-over switch can be controlled by actuating a switch or by means of a voltage applied to a control voltage input of the television apparatus, and including a tuning circuit arrangement with which the HF receiver circuit can be tuned to specific transmitters that are being received or with which it can be tuned using a scanning process and/or can be detuned by means of a fine raster within a channel bandwidth or can be kept tuned to the receiving frequency by means of automatic frequency correcting circuits (AFC), which HF receiver circuit comprises a regulating circuit that is controlled in dependence on the level of reception,
characterised in that,
when the second source of television signals is connected up (audio/video mode or AV mode), the electronic change-over switch (21) remains for a short time under the control of a locking circuit in a first position in which the currently received television signal from the first source of television signals is being detected in the circuit arrangement (20) for detecting a standard television signal, and that, upon establishing the presence of a standard television signal from the first source of television signals, a muting circuit (30) renders the switching device (8) conductive (switch closed) and, in the case where a standard signal is not present, it switches it into the blocked state (switch open), and that the change-over switch (21) only connects the video signal from the second source of television signals to the signal processing circuit, inclusive of the circuit for detecting a standard television signal, after the detection process and in dependence on the control voltage, and
that there is provided a further switching device (22) by means of which the sound from the first source of television signals is disconnected from the sound channel (23, 24) in synchronism with the video signal and the sound signal from the second source of television signals is connected to the sound channel (23, 24), and
that there is provided a blocking circuit (31) which locks out (32) the tuning circuit for a scanning process or a fine tuning of the transmitter - controllable by means of manually actuatable switches - after the connection of the second source of television signals has occurred.

2. Television receiving apparatus in accordance with Claim 1, characterised in that, a third switching device (9) is connected in the signal branch for the video signals from the first source of television signals and is located before the change-over switch (21) and/or a video output (13), the third switching device blocking the video signal branch or rendering it conductive in parallel with the switching device (8).

3. Television receiving apparatus in accordance with Claim 1, characterised in that, the switching device (8) is provided before a sound signal output (12) in the sound signal branch of the sound signal from the first source of television signals.

4. Television receiving apparatus in accordance with any of the Claims 1 to 3 in combination with a receiver circuit including an automatic frequency correcting circuit (AFC), characterised in that, there is provided a detector circuit (28) which detects the automatic frequency control signal and, in the event of a sudden jump as a result of a change in the feed (change of antenna) at the HF terminal of the receiver circuit, generates a blocking signal which controls the muting circuit (30) in such a way that the switching device (8) or the switching devices (8 and 9) switch into the blocking state.

5. Television receiving apparatus in accordance with Claims 1 to 3, characterised in that, there is provided a detector circuit which detects the regulating voltage for the receiver circuit and, in the event of a sudden loss of the regulating voltage as a result of a change in the HF feed (change of antenna) at the HF input, generates a blocking signal which controls the muting circuit (30) in such a way that the switching device (8) or the switching devices (8 and 9) switch into the blocking state.

6. Television receiving apparatus in accordance with any of the preceding Claims, characterised in that, there is provided a microprocessor (14) having a control sequence program as the central control circuit, which microprocessor implements the blocking circuit (31) and/or the muting circuit (30) and/or the locking circuit (29) and that the microprocessor comprises a control input on which the AV switching signal occurs.

7. Television receiving apparatus in accordance with any of the preceding Claims, characterised in that, previously stored channels can be recalled in the AV mode via the tuning circuit contained in the central control circuit (14) and that the switching device (8) and/or the switching devices (8 and 9) render the respective signal branch conductive.

8. Television receiving circuit in accordance with Claim 7, characterised in that, the signals switched through to a signal evaluating and processing circuit are applied via further switching devices for the purposes of picture-in-picture display to a mixer circuit in which the selected signal from the second source of television signals can be mixed with that from the first for producing the display.

9. Television receiving apparatus in accordance with Claim 8, characterised in that, the switching device (22) in the sound channel can be selectively connected to the sound signal path of the first source of television signals or the sound signal path of the second source of sound signals by the further circuit arrangement for the detection of the presence of a complete television signal for picture-in-picture display and that there is provided a switch for selecting the source of the sound signals, which switch provides a control signal to the tuning circuit in the central control circuit (14).

10. Television receiving apparatus in accordance with any of the preceding Claims, characterised in that, the circuit arrangement (20) for the detection of a complete television signal includes an amplitude filter with which the synchronising pulses are separated out and that the circuit arrangement (20) generates a control pulse which is applied to the central control circuit (14) as an item of information in dependence on the detection of the synchronising pulses.

11. Television receiving apparatus in accordance with Claim 10, characterised in that, the circuit arrangement (20) for the detection of a complete television signal comprises a co-incidence detector which is used for checking the synchronising pulses that have been separated out and in which the horizontal synchronising pulses are compared with the vertical synchronising pulses and that the output of the co-incidence circuit supplies an item of control information in dependence on the presence or absence of the synchronising pulses.

## Revendications

1. Appareil de réception de télévision avec un circuit de réception HF pour la réception de signaux de télévision d'une première source de signaux de télévision et avec des entrées et des sorties vidéo et son (FBAS ou BAS) pour la réception de signaux vidéo et son à partir d'une deuxième source de signaux de télévision et pour la délivrance de signaux de vidéo et son à partir de la première source de signaux de télévision, avec un dispositif de commutation destiné à reconnaître un signal de télévision aux normes, qui délivre en fonction d'impulsions de synchronisation une grandeur de commande pour un dispositif de commutation prévu pour la mise en circuit et hors circuit d'une installation de télévision, afin de pouvoir écouter la réception du son d'un signal de télévision aux normes et de ne pas pouvoir l'écouter en cas de réception d'un signal de télévision qui n'est pas aux normes, et avec un commutateur électronique par lequel le signal de télévision de la première source de signaux de télévision est coupé des circuits de traitement des signaux y compris le dispositif de commutation pour la détection d'un signal de télévision aux normes et du canal de son, pendant que le signal de télévision de la deuxième source de signaux de télévision est connecté, lequel commutateur peut être commandé par actionnement d'un commutateur ou par une tension appliquée à une entrée de tension de commutation du téléviseur, et avec un dispositif de circuit de réglage avec lequel le circuit récepteur HF peut être réglé sur certains émetteurs captés ou par balayage des fréquences et/ou ajusté au moyen d'une grille fine à l'intérieur d'une bande passante de canal ou réglé au moyen de circuits de correction de fréquence automatiques (AFC) sur la fréquence de réception, lequel circuit de réception HF présente un circuit de réglage commandé en fonction du niveau de réception,
caractérisé en ce que le commutateur électronique (21) contrôlé par un circuit d'arrêt reste peu de temps, lors de la connexion de la deuxième source de signaux de télévision (fonctionnement Audio/vidéo ou AV), dans une première position dans laquelle le signal de télévision capté à ce moment de la première source de signaux de télévision est détecté dans le dispositif de commutation (20) en vue de reconnaître un signal de télévision aux normes, et en ce que lorsqu'il est constaté qu'un signal de télévision aux normes est présent sur la première source de signaux de télévision, un circuit muet (30) fait commuter le dispositif de commutation (8) de façon conductrice (commutateur fermé) et lorsque le signal présent n'est pas aux normes, il actionne celui-ci de façon à le bloquer (commutateur ouvert), et en ce que ce n'est qu'après la détection du commutateur (21) en fonction de la tension de commutation que le signal vidéo de la deuxième source de signaux de télévision est connecté sur le circuit de traitement des signaux, y compris le circuit de reconnaissance d'un signal de télévision aux normes, en ce qu'il est prévu un autre dispositif de commutation (22) par lequel le son de la première source de signaux de télévision est séparé du canal de son (23, 24) de manière synchrone avec le signal vidéo et le signal son de la deuxième source de signaux de télévision est connecté dans le canal de son (23, 24), et en ce qu'il est prévu un circuit de blocage (31) qui verrouille le circuit de réglage contre le balayage des fréquences ou un réglage fin de l'émetteur -pouvant être commandé par des commutateurs actionnés manuellement- (32) lorsque la connexion de la deuxième source de signaux de télévision est établie.

2. Appareil récepteur de télévision selon la revendication 1, caractérisé en ce qu'un troisième dispositif de commutation (9) est monté dans la branche de signal du signal vidéo de la première source de signaux de télévision et en amont du commutateur (21) et/ou d'une sortie vidéo (13) qui connecte ou bloque la branche de signal vidéo parallèlement au dispositif de commutation (8).

3. Appareil récepteur de télévision selon la revendication 1, caractérisé en ce que le dispositif de commutation (8) est prévu dans la branche de signal du signal de son de la première source de signaux de télévision avant une sortie de signal de son (12).

4. Appareil récepteur de télévision selon l'une ou l'ensemble des revendications 1 à 3, en relation avec un circuit récepteur pourvu d'un circuit de correction de fréquence automatique (AFC), caractérisé en ce qu'il est prévu un circuit détecteur (28) qui détecte le signal de régulation de fréquence automatique et, en cas de saut soudain à la suite d'un changement d'apport (changement d'antenne) sur la connexion HF du circuit récepteur, émet un signal de blocage qui commande le circuit muet (30) de telle sorte que le dispositif de commutation (8) ou les dispositifs de commutation (8 et 9) commutent en vue du blocage.

5. Appareil récepteur de télévision selon l'une des revendications 1 à 3, caractérisé en ce qu'il est prévu un circuit détecteur qui détecte la tension de régulation du circuit récepteur et, en cas d'arrêt soudain de la tension de régulation à la suite d'un changement d'apport HF (changement d'antenne) à l'entrée HF, produit un signal de blocage qui commande le circuit muet (30) de telle sorte que le dispositif de commutation (8) ou les dispositifs de commutation (8 et 9) commutent en vue du blocage.

6. Appareil récepteur de télévision selon l'une ou l'ensemble des revendications précédentes, caractérisé en ce qu'il est prévu comme circuit de commande central un microprocesseur (14) avec un programme de commande du déroulement qui réalise le circuit de blocage (31) et/ou le circuit muet (30) et/ou le circuit d'arrêt (29), et en ce que le microprocesseur présente une entrée de commande à laquelle est appliqué le signal de commutation AV.

7. Appareil récepteur de télévision selon l'une ou l'ensemble des revendications précédentes, caractérisé en ce qu'en fonctionnement AV, des canaux préalablement mémorisés peuvent être appelés par le circuit de réglage contenu dans le circuit de commande central (14) et en ce que le circuit de commutation (8) et/ou les circuits de commutation (8 et 9) commutent la branche de signal correspondante en vue de la conduction.

8. Appareil récepteur de télévision selon la revendication 7, caractérisé en ce que les signaux transmis sont appliqués à un circuit d'évaluation et de traitement des signaux par l'intermédiaire de plusieurs dispositifs de commutation supplémentaires et, pour la représentation en images incrustées, à un circuit mélangeur, dans lequel le signal sélectionné de la deuxième source de signaux de télévision peut être mélangé à celui de la première source pour la représentation.

9. Appareil récepteur de télévision selon la revendication 8, caractérisé en ce que l'autre dispositif de commutation peut, pour la détection de la présence d'un signal de télévision complet pour la représentation en images incrustées, connecter sélectivement le dispositif de commutation (22) du canal de son au trajet de signal de son de la première source de signaux de télévision ou au trajet de signal de son de la deuxième source de signaux de télévision, et en ce qu'il est prévu pour la sélection de la source de signaux de son un commutateur qui envoie un signal de commutation au circuit de réglage du circuit de commande central (14).

10. Appareil récepteur de télévision selon l'une ou l'ensemble des revendications précédentes, caractérisé en ce que le dispositif de commutation (20) contient, pour la reconnaissance d'un signal de télévision complet, un filtre d'amplitudes qui sépare les impulsions synchrones, et en ce que le dispositif de commutation (20) produit une impulsion de commande, en fonction de la détermination des impulsions synchrones, qui se trouve sous la forme d'informations dans le circuit de commande central (14).

11. Appareil récepteur de télévision selon la revendication 10, caractérisé en ce que le dispositif de commutation (20) présente, pour reconnaître un signal de télévision complet, un détecteur de coïncidence destiné à contrôler les impulsions synchrones séparées, dans lequel les impulsions synchrones horizontales sont comparées à des impulsions synchrones verticales, et en ce que la sortie du circuit de coïncidence délivre une information de commande en fonction de la présence ou de l'absence des impulsions synchrones.
